# FASCICULE DE BREVET EUROPEEN

(11) **EP 1 590 931 B1**
(45) Date de publication et mention de la délivrance du brevet: **13.03.2013**
(21) Numéro de dépôt: 04703199.2
(22) Date de dépôt: 19.01.2004
(51) Int. Cl.: H04L 29/08

(54) **PROCEDE DE PRESENTATION D'ETAT D'UN UTILISATEUR UTILISANT PLUSIEURS EQUIPEMENTS DE COMMUNICATION**
VERFAHREN ZUM PRÄSENTIEREN DES STATUS EINES BENUTZERS, DER MEHRERE KOMMUNIKATIONSEINRICHTUNGEN VERWENDET
METHOD OF PRESENTING THE STATUS OF A USER USING SEVERAL COMMUNICATION DEVICES

(30) Priorité: 17.01.2003 FR 0300542
(43) Date de publication de la demande: 02.11.2005
(73) Titulaire: Liakis, Panagiotis, 18344 Moschaton-Athens (GR)
(72) Inventeur: Liakis, Panagiotis, 18344 Moschaton-Athens (GR)
(74) Mandataire: Novagraaf Technologies
(86) Numéro de dépôt international: PCT/FR2004/000106
(87) Numéro de publication internationale: WO 2004/068809

(56) Documents cités:
- EP-A- 1 225 752
- US-A1- 2002 075 306
- US-B1- 6 449 344
- ESCHENBURG A: "WO LAUFEN SIE DENN? ICQ HAELT VERBINDUNG ZU BEKANNTEN" CT MAGAZIN FUER COMPUTER TECHNIK, VERLAG HEINZ HEISE GMBH., HANNOVER, DE, no. 22, 26 octobre 1998 (1998-10-26), pages 92-95, XP000779803 ISSN: 0724-8679

## Description

L'invention concerne le domaine des télécommunications d'usagers, et plus particulièrement celui de la fourniture de moyens à un utilisateur utilisant des équipements de communication ayant chacun leur état propre à informer d'autres utilisateurs ayant souscrit ce service de la disponibilité de ces équipements pour des communications.

De nombreuses situations dans le monde des télécommunications nécessitent l'utilisation de un et souvent de plusieurs terminaux d'usagers. Ceux-ci peuvent être, par exemple, un ordinateur personnel, un téléphone ou encore un assistant personnel. Les évolutions des technologies ont permis de rendre ces différents terminaux capables de fonctionner sur des réseaux de télécommunications mobiles ou fixes ou même capables de fonctionner dans ces deux situations. Il est connu dans les réseaux de télécommunications de pouvoir communiquer avec ces terminaux avec des techniques d'adressage identiques ou différentes. De ce fait il est possible pour une application de communiquer avec l'ensemble des terminaux d'usager sur ces différents réseaux fixes ou mobiles avec des protocoles de communication appropriés. La problématique posée pour l'utilisateur est que l'usager destinataire de l'appel peut utiliser plusieurs terminaux et ceux-ci peuvent se trouver dans des états physiques et logiques différents (en service ou hors service), connectés ou non à des réseaux de communication (en ligne, hors ligne), avec des applications activées ou non activées propres à recevoir les communications. De plus, certaines applications offrent à cet usager des services permettant d'accepter ou refuser des communications ou des types de communications et d'en accepter d'autre et ceci avec la possibilité d'utiliser l'identité de l'appelant pour cela. D'autre part l'usager destinataire de l'appel peut se trouver momentanément absent et l'appel peut se révéler inefficace ou être redirigé vers un équipement auxiliaire en cas d'absence tel qu'une messagerie vocale. Dans ces conditions il est difficile pour un usager désirant en joindre un autre de savoir quelle est la probabilité d'un appel efficace.

Un certain nombre d'équipements ont tenté de répondre à cette problématique. Ce sont, par exemple, les équipements permettant la connexion en messagerie instantanée. Ces équipements sont reliés à un serveur de présence permettant d'identifier la nature et l'état de la connexion avec le terminal. Une application permet également de gérer la présentation des états des différents terminaux utilisables par l'utilisateur (déconnecté, occupé, libre, interdit, renvoyé,...). Les organismes de standardisation se sont également penchés sur la standardisation des protocoles d'échanges permettant à une relation client-serveur de s'établir de façon interopérable pour la communication des états de connexion et des états des terminaux. Parmi ceux-ci on peut citer l'OMA (Open Mobile Alliance) ou encore l'IETF (Internet Forum). La plupart de ces applications proposées aujourd'hui permettent de gérer un seul terminal visible de l'usager susceptible d'indiquer sa disponibilité pour une communication.

Or il est clair que ce type de procédé ne peut être appliqué que sur des personnes ne gérant qu'un seul terminal à la fois. Dans le monde d'aujourd'hui et surtout avec l'apparition des technologies mobiles, un utilisateur est amené à gérer plusieurs types de terminaux simultanément. Par exemple, il pourra être joignable pour une communication vocale par son terminal opérant sur un réseau de type cellulaire public et simultanément sur son PC connecté à la maison pour un échange de messages. La présentation à l'utilisateur de l'état des terminaux du correspondant qu'il désire joindre devient donc plus complexe. Il s'ensuit pour le demandeur la possibilité de choisir le type de relation qu'il désire établir avec son correspondant (Message ou voix par exemple).

Une difficulté supplémentaire réside dans le fait que l'usager ne peut être joint sur un de ces terminaux par une seule adresse. Ainsi, si l'usager doit pouvoir être joint sur plusieurs terminaux, il devra, par exemple, être adressé de la manière suivante : Nom.prenom.PC@domain ou encore Nom.prenom.portable@domain. Le problème majeur pour ce type de dispositif vient du fait qu'il n'est pas toujours facile de connaître à priori la méthode pour adresser tel ou tel terminal d'un usager. Les serveurs de messagerie instantanée ont trouvé une solution. Elle consiste à n'avoir qu'un terminal d'un usager à la fois connecté à une session de messagerie instantanée et ainsi de ne présenter aux autres utilisateurs que ce seul terminal et son état. La plupart de ces serveurs se réclame de la possibilité de gérer un utilisateur et de multiples terminaux alors qu'en réalité, ils ne peuvent le faire de manière simultanée. L'état de l'art antérieur a d'ailleurs fait l'objet de dépôt de brevet tel que le brevet américain de la société America Online (AOL) N°6449344), déposé en 1997, et délivré en septembre 2002.

Par conséquent, aucun procédé n'apporte une entière satisfaction en matière de fourniture de services aux personnes identifiées.

L'invention a donc pour but de remédier aux inconvénients des procédés existants visant des populations utilisant des terminaux multiples localisés de manière associée ou dissociée de l'utilisateur et rendant ainsi les communications plus efficaces. Elle propose à cet effet un procédé de fourniture de services pour des équipements de télécommunication permettant de présenter pour un utilisateur donné connu sous une seule adresse, comme par exemple Nom.prenom@domain, une multitude de terminaux et, pour chacun d'entre eux, l'état physique et/ou logique de la connexion.

Plus précisément, le procédé concerne, à partir des informations fournies par un ou plusieurs équipements de télécommunication d'un utilisateur, à permettre la présentation fonctionnelle de leurs états en fonction de règles propres au service ou aux possibilités techniques des systèmes. Le système avantageusement utilise un serveur ou un procédé multi-serveurs pour permettre l'association de plusieurs terminaux à un seul utilisateur et à chacun de ces terminaux faire correspondre un état physique et/ou logique représentant la disponibilité de la communication sur ce terminal. Bien entendu, les règles de mise à jour de cet état obéissent à l'état de l'art et peuvent obéir à des évènements tel que lien de télécommunication absent ou présent, terminal opérationnel ou non, désir de l'entreprise de présenter la disponibilité de cet équipement pour des télécommunications, désir de l'utilisateur de présenter la disponibilité de cet équipement pour des télécommunications, désir de l'utilisateur de présenter son humeur sur ce terminal.

Ce procédé se caractérise par le fait qu'il comprend :
* une première étape au cours de laquelle on procède à l'acquisition de premières données composées des caractéristiques d 'un utilisateur comportant au moins une identification de celui-ci, d'au moins deux terminaux auquel il peut être raccordé avec au moins une caractéristique de leur mode de connexion et au stockage à une adresse accessible à la plate-forme intelligente de ces caractéristiques, et
* une seconde étape dans laquelle on procède à la mise à jour de secondes données représentatives de l'état d'un terminal d'un utilisateur avec les demandes de mise à jour de l'état d'un terminal associé à l'identification d'un utilisateur par un système ou un utilisateur autorisé et au stockage éventuel à une adresse accessible à la plate-forme intelligente de ces secondes données représentatives de l'état souhaité du terminal, et
* une troisième étape au cours de laquelle on procède à partir des premières et secondes données à l'élaboration et à la présentation des premières et secondes données pour un utilisateur qui est inscrit au service de présentation de l'état d'un utilisateur de la plate-forme intelligente et qui en a fait la demande.

L'invention se distingue par l'utilisation de la tout ou partie des fonctionnalités de l'application par l'utilisateur équipé d'une pluralité d'équipements dont certains peuvent être de même nature. Par exemple, l'utilisateur peut disposer de plusieurs ordinateurs personnels : un voire plusieurs ordinateurs sur son lieu de travail, un ordinateur à son domicile, un ordinateur portable,...

Tous ces ordinateurs sont associés au même identifiant logique caractérisé par une adresse de type nom.prénom@domaine.

Dans des solutions de l'art antérieur, l'état de l'utilisateur est présenté d'une façon unique en fonction de l'état déterminé par l'utilisateur, de façon non spécifique pour un équipement particulier.

L'art antérieur connaît par exemple par la demande américaine US 2002/075306 une solution où une suite de services de collaboration est adaptée de façon à prendre en charge une pluralité de services de télécommunications intégrés auxquels les membres d'une équipe géographiquement dispersée accèdent via un client d'environnement d'équipe virtuel (VTE) qui génère une interface utilisateur graphique (GUI) pour chaque membre respectif de l'équipe. Des sessions de communication sont installées automatiquement par la suite de services de collaboration en réponse à des messages de demande via la GUI. Les membres de l'équipe n'ont pas besoin de connaître une adresse de dispositif de communication d'un autre membre de l'équipe pour lancer une session de communication. Cette suite de services de collaboration comprend un serveur VTE qui communique avec les clients VTE, un moteur de présence qui collecte et maintient un statut des dispositifs de communication spécifiés dans un profil courant du membre de l'équipe et un serveur d'appel permettant de commander l'installation et la commande d'un élément vocal de chaque session de communication effectuée

Dans ce type de solution, le problème est que, si l'utilisateur se déclare « disponible » pour un équipement de type ordinateur personnel, les autres utilisateurs le verront comme « disponible » de façon générale pour tous ses équipements de type « ordinateur personnel » connectés. En d'autres termes, pour tous les équipements connectés, l'utilisateur sera signalé comme « disponible ».

Si l'utilisateur veut se déclarer « disponible » pour un équipement connecté et se déclarer « indisponible » pour un autre équipement connecté, la seule solution qui s'offre à lui est de se créer une deuxième identité, l'une étant utilisée pour les équipements pour lesquels il souhaite se déclarer « disponible », et l'autre identité étant utilisée pour les autres équipements connectés pour lesquels il souhaite se déclarer « indisponible ».

Cette solution n'est bien sûr ni ergonomique, ni techniquement optimale. Les autres utilisateurs devront connaître plusieurs identités pour un même destinataire, et choisir l'une de celle en fonction de l'état instantané de déclaration de ce destinataire. L'utilisateur qui veut gérer ses deux contextes devra gérer plusieurs sessions ouvertes simultanément, ce qui augmente les besoins de ressources mémoires, de flux, etc...

Par ailleurs, il faut que les autres utilisateurs connaissent la liste des équipements de l'utilisateur et de gérer un profil de l'utilisateur de façon manuelle, en éditant le profil de chaque utilisateur, en renseignant les adresses physiques de chaque équipement (adresse IP pour les ordinateurs, numéro de téléphone pour les équipements téléphoniques, ...).

L'art antérieur connaît également, par la demande de brevet européen EP 1225752, un système d'acheminement permettant l'acheminement intelligent de messages instantanés entre des clients reliés à un réseau de données (61) et des représentants d'un service client connecté au réseau. Le système comprend au moins un serveur de message instantané (15) et au moins un serveur intermédiaire (25) connecté à un réseau et adressable sur ce réseau, le serveur intermédiaire étant capable de réaliser l'acheminement vers le serveur de message instantané et étant accessible à celui-ci. Les clients connectés au serveur de message instantané par le biais du logiciel de message instantané exercent une liaison de connexion annoncée par le serveur de message instantané afin d'établir la communication bidirectionnelle entre la machine client et le serveur intermédiaire. Dans un mode de réalisation préféré, le serveur intermédiaire interagit avec le client afin d'identifier le client et le logiciel client. La demande du client est ensuite acheminée vers un représentant du service client approprié exploitant un logiciel compatible avec les règles de l'entreprise établissant une connexion de message instantané active entre le client et le représentant de service client choisi.

Ce type de solution possède l'inconvénient de ne pouvoir gérer plusieurs sessions pour un même terminal de l'utilisateur, puisque les états ne sont proposés que pour un terminal spécifique.

L'invention se distingue des solutions de l'art antérieur par des moyens de gestion dynamique des équipements et des statuts des utilisateurs.

L'invention concerne un procédé tel que défini par la revendication 1.

En particulier, le serveur selon l'invention enregistre lors de chaque demande de connexion d'un utilisateur de manière dynamique les adresses de chacun de ses équipements, et pour chacun de ces équipements, les caractéristiques de la connexion et l'état de disponibilité de l'utilisateur pour l'équipement en question. Cet état peut être différent, pour un même utilisateur, pour certains de ses équipements. Une autre caractéristique avantageuse de l'invention est que pour identifier le type d'équipement on se sert de la caractéristique de son moyen de connexion et/ou des caractéristiques de la session attachée à l'équipement. Ses caractéristiques pouvant être transmises ou déduites grâce au logiciel permettant d'établir la session et/ou directement renseigné par l'utilisateur. Ainsi, par exemple bien que la caractéristique d'établissement d'une session nouvelle soit de type utilisation d'un protocole http indiquant dans l'état de l'art actuel la connexion probable d'un ordinateur personnel à partir d'un « browser », l'utilisateur peut être amené à caractériser son équipement connecté de manière plus fine par un sous-type comme par exemple ordinateur portable ou encore en indiquant de manière manuelle le support d'une transmission de type voix ou vidéo. Dans une autre caractéristique de l'invention, ces caractéristiques pouvant être fournies de manière automatique par le logiciel résidant sur l'équipement. Il pourra être établi également de manière manuelle et/ou automatique l'existence de différents moyens de communication disponibles ou indisponibles attachés à la session donc à l'équipement tel que transmission vocale, vidéo, SMS, ou Messagerie. Ainsi, nous voyons que bien plus que la simple caractéristique de l'équipement, c'est la caractéristique de la session attachée à l'équipement et ouverte et gérée par l'utilisateur qui va être utilisée dans l'invention. Ainsi la pluralité de sessions ouvertes par l'utilisateur sur des équipements similaires ou différents va lui permettre une grande souplesse d'indication de son état de présence et de ses préférences en termes de choix de moyens de communication.

Il peut se déclarer, pour une identité unique, « disponible » pour son ordinateur du lieu de travail, et « indisponible » pour son ordinateur de son domicile ainsi que pour son téléphone.

Les autres utilisateurs ayant enregistré dans leur liste l'utilisateur en question pourront visualiser de manière immédiate et globale ses équipements connectés et leur statut spécifique au regard des déclarations de l'utilisateur.

Ceci permet d'adresser un message sans avoir à sélection un compte utilisateur différent.

Il peut également définir des modalités de diffusion sur ses différents équipements en gérant les caractéristiques d'enregistrement, de suppression du serveur ou d'un ou de plusieurs autres équipements, de non-transmission sur ses autres équipements, et de réception prioritaire.

Lorsque l'utilisateur se connecte au serveur, il s'authentifie sur le serveur en premier lieu, par une méthode de type « login / password ».

Le serveur identifiera l'utilisateur et acquiert les caractéristiques de la connexion pour créer une session pour cet utilisateur et pour le type d'équipement à partir duquel cette session a été initialisée.

S'il s'agit de la première session pour cet utilisateur, le serveur met à jour la table de l'utilisateur avec ce seul type de terminal, ainsi que l'état déclaré par l'utilisateur. Ces informations seront visibles par tous les autres utilisateurs.

S'il s'agit non pas de la première session, mais d'une session supplémentaire, le serveur met à jour la table de l'utilisateur avec les caractéristiques de cette nouvelle session et diffuse à l'utilisateur en question ainsi qu'à tous les autres utilisateurs ce nouvel état de l'ensemble des sessions de l'utilisateur considéré.

Ainsi, les utilisateurs vont voir apparaître dynamiquement l'état des différentes sessions attachés à des type d'équipements connectés d'un utilisateur donné, ainsi que l'état déclaré par ledit utilisateur, pour chacune desdites sessions attachées aux équipements connectés avec les indications des différents modes de communication supportés par la session.

En d'autres termes, pour chaque utilisateur, on distingue l'état physique de connexion et l'état logique.

L'état physique correspond à l'ouverture d'une session de communication entre le serveur et un équipement donné de cet utilisateur.

L'état logique correspond, pour un équipement connecté d'un utilisateur donné, à l'état déclaré par ce dernier (« disponible », « indisponible », « occupé »,...). Cet état logique peut également inclure les préférences utilisateurs pour l'utilisation des moyens de communication pouvant être initiés par les autres utilisateurs et disponibles sur l'équipement.

Ces deux informations combinées sont essentielles pour permettre une communication efficace et conforme aux attentes de l'utilisateur.

Ces procédures peuvent être automatisées ou traitées manuellement et instruire des états par défaut.

Ceci constitue une différence essentielle avec les solutions de l'art antérieur, qui n'individualisent pas l'état logique d'un utilisateur en fonction de ses différents équipements. Par ailleurs, les solutions de l'art antérieur ne gèrent pas dynamiquement l'ouverture ou la fermeture de nouvelles sessions par un utilisateur donné, disposant de plusieurs équipements.

Le procédé selon l'invention pourra comporter de nombreuses caractéristiques complémentaires qui pourront être prises séparément et/ou en combinaison, et en particulier :
- des premières et secondes données stockées dans au moins une base de données ;
   certaines secondes données pouvant être représentatives d'état peuvent être subdivisées. Par exemple, un premier niveau ne détermine qu'un niveau d'état général, tandis qu'un second niveau permet la détermination de caractéristique de l'humeur associée de la personne ;
- une étape auxiliaire dans laquelle on procède à la régulation de ce service par contrôle et exécution de la première, seconde et troisième étapes afin de déterminer la nécessité de poursuivre le service demandé. L'invention porte également sur un dispositif de corrélation entre les premières données représentative d'un utilisateur et tout ou partie des états de ces terminaux et la détermination de l'état caractérisé de l'utilisateur permettant le déclenchement d'une action de changement d'état général associé à l'utilisateur approprié. Ainsi ce dispositif permet d'adapter la demande faite à la plate-forme intelligente à la fonctionnalité décrite dans la troisième étape du procédé de manière dynamique ou pseudo-statique dépendante de la fréquence de l'apport des données externes et/ ou des règles de corrélation.
- des moyens de mise à jour capables de mettre à jour, périodiquement ou sur requête, le contenu des premières et secondes données. De tels moyens de mise à jour sont préférentiellement implantés dans un serveur de liaison dépendant de la plate-forme intelligente ;
- des moyens de gestion dont une partie au moins est préférentiellement implantée dans un serveur de gestion du réseau public et pouvant comporter les moyens de stockage comprenant le contenu des premières et secondes données associées à tout ou partie d'un état caractérisé représentatif de l'état de général de disponibilité pour des communications d'un utilisateur.

L'état de l'utilisateur peut être automatisé, de même que le choix du média et du meilleur média, évitant ainsi à l'utilisateur de spécifier manuellement ses préférences et souhaits.

Cette automatisation peut se faire par des règles exploitant des données exogènes (heure, temps, coût des différentes communication, jour, évènements,...) et des données endogènes (localisation de l'utilisateur, état physique de ses équipements,...).

Une partie de l'invention peut donc être mise en oeuvre dans tout type de réseau de communications, privé ou public, et en particulier dans les réseaux Internet, PLMN et PSTN pour par exemple des réseaux publics GSM et UMTS ou par exemple TETRA et RUBIS pour des réseaux privés.

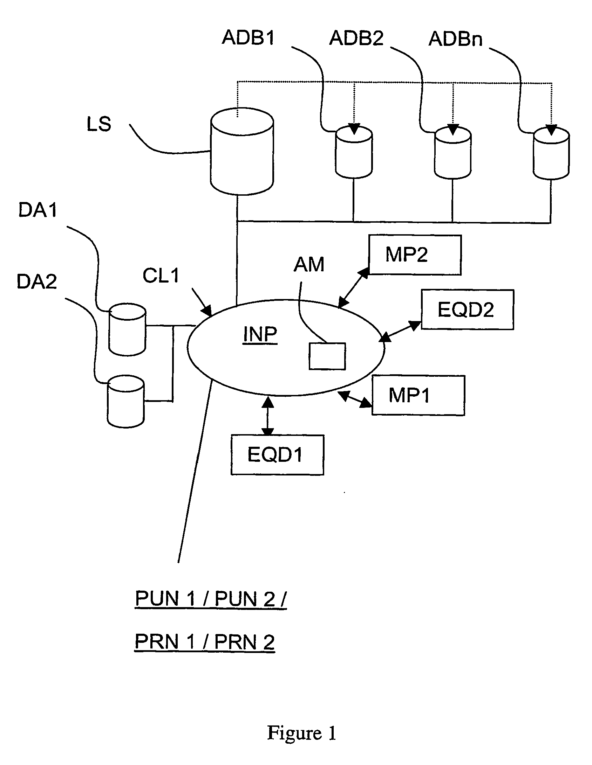

D'autres caractéristiques et avantages de l'invention apparaîtront à l'examen de la description détaillée ci-après, et de l'unique dessin annexé en figure 1, qui illustre de façon schématique une installation d'équipements et de communications multi-réseaux, équipée d'un dispositif selon l'invention. Ce dessin est, pour l'essentiel, de caractère certain. En conséquence, il pourra non seulement servir à compléter l'invention, mais aussi contribuer à sa définition, le cas échéant.

Un dispositif comportant une plate-forme intelligente (INP) assure la fourniture de services à des personnes munis d'équipements de télécommunication propre à établir des communications de type voix ou données (EQD1, EQD2) à l'aide de moyen de production de services (MP1, MP2) connectés à la plate-forme intelligente (INP).

La plate-forme (INP) peut-être connecté à un réseau public ou privé (PUN1-PUN2, PRN1-PRN2).

Le dispositif comprend
i) au moins une base de données (ADB1,ADB2),
ii) au moins un moyen de production de présentation d'un état général d'un utilisateur et particulier de ses terminaux associés (MP1, MP2), et
iii) des moyens de gestion (AM) propre à mettre à jour les données d'état des équipements de télécommunication venant au moins d'un système ou sur la demande d'un utilisateur ou sur la demande de l'équipement lui-même (EQD1, EQD2) et les données de l'utilisateur dans la base de données (ADB1, ADB2), de manière ce que la plate-forme (INP) puisse mettre en oeuvre le service demandé par un utilisateur par au moins un moyen approprié (MP1, MP2). Le dispositif peut disposer d'un moyen de mise à jour (LS) des données (ADB1, ADB2) et être connecté sur le réseau public (PUNI, PUN2) ou privé (PRN1, PRN2) pour une mise à jour sur demande ou périodique.

Le dispositif peut également disposer de données d'autorisation (DA1, DA2) permettant une production appropriée (MP1, MP2) sur demande locale ou distante grâce à des commandes locales (CL1, CL2) ou distantes acheminées par les réseaux (PRN1, PRN2, PUNI, PUN2).

L'invention ne se limite pas aux modes de réalisation de procédés et dispositifs décrits ci-avant, seulement à titre d'exemple, mais elle englobe toutes les variantes que pourra envisager l'homme de l'art dans le cadre des revendications ci-après.

Avantageusement, la solution décrite peut être étendue de façon à gérer des notions de propriété et d'autorisation tant sur les données que sur les moyens de mise à jour des données que sur les productions appropriées grâce aux données gérées par la plate-forme INP.Ainsi les bases de données peuvent sur le même serveur contenir des données appartenant à des entreprises différentes et le serveur peut permettre la présentation de l'état général d'un utilisateur et des états particuliers de chacun de ses terminaux à des utilisateurs appartenant à des entreprises différentes pour autant qu'elles en aient donné l'autorisation.

## Revendications

1. Procédé de présentation de l'état de disponibilité d'un utilisateur pour des communications utilisant au moins deux terminaux de télécommunication (EQD1, EQD2) comportant au moins un moyen de production (MP1, MP2) de cette présentation associé à une plate-forme intelligente (INP), le procédé comprenant:
- une première étape au cours de laquelle on procède à l'acquisition de premières données composées des caractéristiques d'un utilisateur comportant au moins une identification de celui-ci, et desdits au moins deux terminaux auquel il peut être associé avec au moins une caractéristique de leur mode de connexion et au stockage à une adresse accessible à la plate-forme intelligente de ces caractéristiques,
- une seconde étape dans laquelle on procède à la mise à jour de secondes données représentatives de l'état physique et/ou logique d'un terminal de l'utilisateur et/ou de l'état physique et/ou logique général de l'utilisateur avec les demandes de mise à jour de l'état physique et/ou logique d'un terminal associé et/ou de l'utilisateur grâce à l'identification de l'utilisateur et/ou de son terminal par un système et /ou un utilisateur autorisé et au stockage éventuel à une adresse accessible à la plate-forme intelligente de ces secondes données représentatives de l'état physique et/ou logique du terminal ou de l'état physique et/ou logique de l'utilisateur, et
- une troisième étape au cours de laquelle on procède à partir des premières et secondes données à l'élaboration de la présentation des premières et secondes données pour un utilisateur qui est inscrit à un service de présentation de l'état d'un utilisateur de la plate-forme intelligente et qui en a fait la demande,
le procédé étant **caractérisé en ce que** lors de la première étape on procède à l'acquisition des premières données composées des caractéristiques de l'utilisateur et desdits au moins deux terminaux lorsque l'utilisateur est connecté simultanément à un serveur par lesdits au moins deux terminaux selon une pluralité de sessions associées chacune à un terminal, et **en ce que**, dans la deuxième étape, la mise à jour est réalisée pour chacune des sessions de la pluralité de sessions lorsque l'utilisateur est connecté simultanément audit serveur par lesdits au moins deux terminaux, de sorte que la plateforme (INP) puisse mettre en oeuvre le service demandé par l'utilisateur par lesdits au moins deux terminaux.

2. Procédé selon la revendication 1, **caractérisé en ce que** les premières et secondes données sont stockées dans au moins une base de données **(AB1-ABn)** de la plate-forme intelligente.

3. Procédé selon l'une quelconque des revendications 1 ou 2, **caractérisé en ce qu'**une présentation des états d'un utilisateur et de ses terminaux peut être associée à la génération d'un message multimédia.

4. Procédé selon l'une quelconque des revendications 1 ou 2, **caractérisé en ce que** les secondes données associées à tout ou partie d'un état physique et/ou logique des terminaux **(EQD1, EQD2)** ou de l'utilisateur sont constituées par au moins un descripteur représentatif d'au moins un état compris dans l'ensemble constitué par l'état de connexion, l'état de déconnexion, l'état de service, l'état de visibilité, l'état de disponibilité, l'état d'occupation, l'état représentatif de l'humeur déclarée ou calculée de la personne.

5. Procédé selon l'une quelconque des revendications 1 ou 2, **caractérisé en ce que** les secondes données associées à tout ou partie d'un état physique et/ou logique des terminaux **(EQD1, EQD2)** ou de l'utilisateur est constitué par au moins un descripteur représentatif d'une combinaison d'états compris dans l'ensemble constitué par l'état de connexion, l'état de déconnexion, l'état de service, l'état de visibilité, l'état de disponibilité, l'état d'occupation, l'état représentatif de l'humeur déclarée ou calculée de la personne.

6. Procédé selon l'une quelconque des revendications 1 ou 2, **caractérisé en ce que** les moyens de production de présentation **(MP1, MP2)** sont associés à des troisièmes données **(DA1, DA2)** représentatives d'une autorisation d'accès à au moins un service de présentation et/ou de mise à jour de données disponibles sur la plate-forme intelligente **(INP).**

7. Procédé selon la revendication 1, **caractérisé en ce que** la demande de présentation est déclenchée par une personne.

8. Procédé selon la revendication 1, **caractérisé en ce qu'**une étape auxiliaire est effectuée après la mise en oeuvre de la plate-forme intelligente pour refaire l'exécution **desdites** première, seconde et troisième étapes afin de déterminer la nécessité de poursuivre le service de présentation demandé.

9. Procédé selon la revendication 1, **caractérisé en ce qu'**une étape de corrélation entre les premières données décrivant l'utilisateur et ses terminaux associés, d'une part, et les secondes données représentatives de l'état physique et/ou logique des terminaux ou de l'utilisateur, d'autre part, est effectuée et permet le déclenchement du service de présentation en fonction de règles.

10. Procédé selon la revendication 9, **caractérisé en ce que** les règles sont fournies par des données externes.

11. Procédé selon la revendication 10, **caractérisé en ce qu'**après l'étape de corrélation effectuée, les secondes données associées à un état physique et/ou logique d'un terminal ou de l'utilisateur servant à la troisième étape décrite dans la revendication 1 sont mises à jour.

12. Procédé selon la revendication 1, **caractérisé en ce que** des moyens **(AM)** mettent à jour, périodiquement ou sur requête, le contenu d'une base de données **(ADB1-ADBn).**

13. Procédé selon la revendication 12, **caractérisé en ce que** les moyens de mise à jour **(AM)** sont implantés dans un serveur de données en liaison ponctuelle ou permanente avec la plate-forme intelligente.

14. Procédé selon la revendication 12, **caractérisé en ce que** la plate-forme intelligente **(INP)** ou/et les moyens de mise à jour **(AM)** sont implantés dans un serveur de gestion d'un réseau de communications qui comportent des moyens de stockage du contenu de la base de données.

15. Procédé selon la revendication 14, **caractérisé en ce que** le réseau de communications est privé ou public, mettant en oeuvre des liaisons fixes ou mobiles.

## Claims

1. Method for presenting the status of availability of a user for communications using at least two telecommunication terminals (EQD1, EQD2) comprising at least one means (MP1, MP2) of producing this presentation associated with a smart platform (INP), the method comprising:
- a first step comprising the acquisition of first data made up of the characteristics of a user comprising at least an identification of said user, and of said at least two terminals with which he or she may be associated, with at least one characteristic of their connection mode, and the storage of these characteristics at an address accessible to the smart platform,
- a second step comprising the updating of second data representative of the physical and/or logical status of a terminal of the user and/or of the general physical and/or logical status of the user with the requests to update the physical and/or logical status of an associated terminal and/or of the user through the identification of the user and/or of his or her terminal by an authorized system and/or user and the possible storage of these second data representative of the physical and/or logical status of the terminal or of the physical and/or logical status of the user at an address accessible to the smart platform, and
- a third step comprising, based on the first and second data, the generation of the presentation of the first and second data for a user who is registered with a service for presenting the status of a user of the smart platform and who has made the request thereof,
the method being **characterized in that**, during the first step, first data are acquired made up of the characteristics of the user and of said at least two terminals when the user is connected simultaneously to a server by said at least two terminals according to a plurality of sessions each associated with a terminal, and **in that**, in the second step, the updating is carried out for each of the sessions of the plurality of sessions when the user is connected simultaneously to said server by said at least two terminals, so that the platform (INP) can implement the service requested by the user by said at least two terminals.

2. Method according to Claim 1, **characterized in that** the first and second data are stored in at least one database (AB1-ABn) of the smart platform.

3. Method according to any one of Claims 1 or 2, **characterized in that** a presentation of the statuses of a user and of his or her terminals can be associated with the generation of a multimedia message.

4. Method according to any one of Claims 1 or 2, **characterized in that** the second data associated with all or part of a physical and/or logical status of the terminals (EQD1, EQD2) or of the user consist of at least one descriptor representative of at least one status out of the set consisting of the connection status, the disconnection status, the service status, the visibility status, the availability status, the occupancy status, the status representative of the declared or calculated mood of the person.

5. Method according to any one of Claims 1 or 2, **characterized in that** the second data associated with all or part of a physical and/or logical status of the terminals (EQD1, EQD2) or of the user consists of at least one descriptor representative of a combination of statuses from the set consisting of the connection status, the disconnection status, the service status, the visibility status, the availability status, the occupancy status, the status representative of the declared or calculated mood of the person.

6. Method according to any one of Claims 1 or 2, **characterized in that** the presentation production means (MP1, MP2) are associated with third data (DA1, DA2) representative of an authorization to access at least one service for presenting and/or updating data available on the smart platform (INP).

7. Method according to Claim 1, **characterized in that** the presentation request is initiated by a person.

8. Method according to Claim 1, **characterized in that** an auxiliary step is performed after the implementation of the smart platform to repeat the execution of said first, second and third steps in order to determine the need to continue the requested presentation service.

9. Method according to Claim 1, **characterized in that** a step of correlation between the first data describing the user and his or her associated terminals, on the one hand, and the second data representative of the physical and/or logical status of the terminals or of the user, on the other hand, is performed and makes it possible to initiate the presentation service on the basis of rules.

10. Method according to Claim 9, **characterized in that** the rules are supplied by external data.

11. Method according to Claim 10, **characterized in that**, after the correlation step performed, the second data associated with a physical and/or logical status of a terminal or of the user used by the third step described in Claim 1 are updated.

12. Method according to Claim 1, **characterized in that** means (AM) update, periodically or on request, the content of a database (ABD1-ABDn).

13. Method according to Claim 12, **characterized in that** the updating means (AM) are located in a data sever linked on demand or permanently with the smart platform.

14. Method according to Claim 12, **characterized in that** the smart platform (INP) and/or the updating mans (AM) are located in a management server of a communication network which comprise means for storing the content of the database.

15. Method according to Claim 14, **characterized in that** the communication network is private or public, implementing fixed or mobile links.

## Patentansprüche

1. Verfahren zur Darstellung des Verfügbarkeitszustands eines Benutzers für Kommunikationen unter Verwendung von mindestens zwei Telekommunikations-Endgeräten (EQD1, EQD2), mit mindestens einer einer intelligenten Plattform (INP) zugeordneten Einrichtung (MP1, MP2) zur Erzeugung dieser Darstellung, wobei das Verfahren Folgendes enthält:
- einen ersten Schritt, während dem die Erfassung erster Daten, die aus den Kennwerten eines Benutzers, die mindestens eine Identifikation von diesem aufweisen, und den mindestens zwei Endgeräten, mit denen er verbunden sein kann, mit mindestens einem Kennwert ihres Verbindungsmodus bestehen, und die Speicherung dieser Kennwerte an einer für die intelligente Plattform zugänglichen Adresse durchgeführt wird,
- einen zweiten Schritt, in dem die Aktualisierung zweiter Daten, die für den physikalischen und/oder logischen Zustand eines Endgeräts des Benutzers und/oder den allgemeinen physikalischen und/oder logischen Zustand des Benutzers repräsentativ sind, mit den Anforderungen der Aktualisierung des physikalischen und/oder logischen Zustands eines zugeordneten Endgeräts und/oder des Benutzers mit Hilfe der Identifikation des Benutzers und/oder seines Endgeräts durch ein System und/oder einen berechtigten Benutzer, und die mögliche Speicherung an einer für die intelligente Plattform zugänglichen Adresse dieser zweiten Daten, die für den physikalischen und/oder logischen Zustand des Endgeräts oder den physikalischen und/oder logischen Zustand des Benutzers repräsentativ sind, durchgeführt werden, und
- einen dritten Schritt, während dem ausgehend von den ersten und zweiten Daten die Erarbeitung der Darstellung der ersten und zweiten Daten für einen Benutzer durchgeführt wird, der bei einem Darstellungsdienst des Zustands eines Benutzers der intelligenten Plattform abonniert ist und der dies gefordert hat,
wobei das Verfahren **dadurch gekennzeichnet ist, dass** im ersten Schritt die Erfassung der ersten Daten durchgeführt wird, die aus den Kennwerten des Benutzers und der mindestens zwei Endgeräte bestehen, wenn der Benutzer gleichzeitig durch die mindestens zwei Endgeräte gemäß einer Vielzahl von je einem Endgerät zugeordneten Sitzungen mit einem Server verbunden ist, und dass im zweiten Schritt die Aktualisierung für jede der Sitzungen der Vielzahl von Sitzungen durchgeführt wird, wenn der Benutzer gleichzeitig durch die mindestens zwei Endgeräte mit dem Server verbunden ist, so dass die Plattform (INP) den vom Benutzer angeforderten Dienst durch die mindestens zwei Endgeräte anwenden kann.

2. Verfahren nach Anspruch 1, **dadurch gekennzeichnet, dass** die ersten und zweiten Daten in mindestens einer Datenbank (AB1-ABn) der intelligenten Plattform gespeichert sind.

3. Verfahren nach einem der Ansprüche 1 oder 2, **dadurch gekennzeichnet, dass** eine Darstellung der Zustände eines Benutzers und seiner Endgeräte der Generierung einer Multimedia-Mitteilung zugeordnet sein kann.

4. Verfahren nach einem der Ansprüche 1 oder 2, **dadurch gekennzeichnet, dass** die zweiten Daten, die dem ganzen oder einem Teil eines physikalischen und/oder logischen Zustands der Endgeräte (EQD1, EQD2) oder des Benutzers zugeordnet sind, aus mindestens einem Deskriptor bestehen, der für mindestens einen Zustand repräsentativ ist, der in der Einheit enthalten ist, die aus dem Verbindungszustand, dem Abschaltungszustand, dem Dienstzustand, dem Sichtbarkeitszustand, dem Verfügbarkeitszustand, dem Besetztzustand, dem für die erklärte oder berechnete Stimmung der Person repräsentativen Zustand besteht.

5. Verfahren nach einem der Ansprüche 1 oder 2, **dadurch gekennzeichnet, dass** die dem ganzen oder einem Teil eines physikalischen und/oder logischen Zustands der Endgeräte (EQD1, EQD2) oder des Benutzers zugeordneten zweiten Daten aus mindestens einem Deskriptor bestehen, der für eine Kombination von Zuständen repräsentativ ist, die in der Einheit enthalten sind, die aus dem Verbindungszustand, dem Abschaltungszustand, dem Dienstzustand, dem Sichtbarkeitszustand, dem Verfügbarkeitszustand, dem Besetztzustand, dem für die erklärte oder berechnete Stimmung der Person repräsentativen Zustand besteht.

6. Verfahren nach einem der Ansprüche 1 oder 2, **dadurch gekennzeichnet, dass** die Einrichtungen zur Erzeugung einer Darstellung (MP1, MP2) dritten Daten (DA1, DA2) zugeordnet sind, die für eine Zugangsgenehmigung zu mindestens einem Darstellungs- und/oder Aktualisierungsdienst von Daten repräsentativ sind, die auf der intelligenten Plattform (INP) zur Verfügung stehen.

7. Verfahren nach Anspruch 1, **dadurch gekennzeichnet, dass** die Darstellungsanforderung von einer Person ausgelöst wird.

8. Verfahren nach Anspruch 1, **dadurch gekennzeichnet, dass** ein Hilfsschritt nach der Anwendung der intelligenten Plattform ausgeführt wird, um die Ausführung der ersten, zweiten und dritten Schritte zu wiederholen, um die Notwendigkeit der Fortsetzung des geforderten Darstellungsdiensts zu bestimmen.

9. Verfahren nach Anspruch 1, **dadurch gekennzeichnet, dass** ein Schritt der Korrelation zwischen den ersten den Benutzer und seine zugeordneten Endgeräte beschreibenden Daten einerseits und den zweiten für den physikalischen und/oder logischen Zustand der Endgeräte oder des Benutzers repräsentativen Daten andererseits ausgeführt wird und das Auslösen des Darstellungsdiensts abhängig von Regeln erlaubt.

10. Verfahren nach Anspruch 9, **dadurch gekennzeichnet, dass** die Regeln von externen Daten geliefert werden.

11. Verfahren nach Anspruch 10, **dadurch gekennzeichnet, dass**, nachdem der Korrelationsschritt durchgeführt wurde, die zweiten einem physikalischen und/oder logischen Zustand eines Endgeräts oder des Benutzers zugeordneten Daten, die für den dritten im Anspruch 1 beschriebenen Schritt dienen, aktualisiert werden.

12. Verfahren nach Anspruch 1, **dadurch gekennzeichnet, dass** die Einrichtungen (AM) periodisch oder auf Anfrage den Inhalt einer Datenbank (ADB1-ADBn) aktualisieren.

13. Verfahren nach Anspruch 12, **dadurch gekennzeichnet, dass** die Aktualisierungseinrichtungen (AM) in einen Datenserver eingesetzt sind, der mit der intelligenten Plattform in punktueller oder Dauerverbindung steht.

14. Verfahren nach Anspruch 12, **dadurch gekennzeichnet, dass** die intelligente Plattform (INP) und/oder die Aktualisierungseinrichtungen (AM) in einen Verwaltungsserver eines Kommunikationsnetzes eingesetzt sind, der Einrichtungen zum Speichern des Inhalts der Datenbank aufweist.

15. Verfahren nach Anspruch 14, **dadurch gekennzeichnet, dass** das Kommunikationsnetz privat oder öffentlich ist und Festnetz- oder mobile Verbindungen anwendet.
